# EUROPÄISCHE PATENTSCHRIFT

(11) **EP 0 347 791 B1**
(45) Veröffentlichungstag und Bekanntmachung des Hinweises auf die Patenterteilung: **31.03.1993**
(21) Anmeldenummer: 89111072.8
(22) Anmeldetag: 19.06.1989
(51) Int. Cl.: B23P 15/00, F16S 1/00, B60P 1/00, B66F 13/00

(54) **Verfahren zum Herstellen von insbesondere gewichtsreduzierten Versteifungsprofilen**
Method, especially for producing weight reducing stiffening profiles
Méthode de fabrication de profils raidisseurs à réduction de poids

(30) Priorität: 24.06.1988 DE 3821275
(43) Veröffentlichungstag der Anmeldung: 27.12.1989
(73) Patentinhaber: Maier, Peter, D-78224 Singen (DE)
(72) Erfinder: Maier, Peter, D-78224 Singen (DE)
(74) Vertreter: Weiss, Peter, Dr. rer.nat.

(56) Entgegenhaltungen:
- DE-A- 2 313 458
- FR-A- 2 575 709

## Beschreibung

Die Erfindung betrifft eine Lade- oder Überfahrbordwand aus einer Plattform und zumindest einer darunter angeordneten Längsschiene b.z.w. einem darunter angeordneten Versteifungsprofile.

Derartige Versteifungsprofile bestehen in der Regel aus Hohlprofilen, welche von entsprechenden Versteifungsrippen durchzogen sind. Ihre Herstellung kann beispielsweise durch Stanzen, Feinschneiden, Pressen oder Strangpressen stattfinden. Sowohl diese Herstellungsweisen wie auch die Kosten des Rohstoffes, aus dem die Versteifungsprofile gebildet werden, stellen heute ein Problem dar.

Die Versteifungsprofile sollen auf der einen Seite höchsten Anforderungen gerecht werden, was ihre pysikalischen Eigenschaften betrifft, auf der anderen Seite so leicht wie möglich sein und mit so wenig Rohstoffeinsatz wie möglich auskommen.

Beispielsweise ist die Herstellung von Roboterarmen durch Feinschneiden oder Stanzen recht kostengünstig durchzuführen. Andererseits sind aber die Abfälle, die beim Feinschneiden und Stanzen anfallen, wiederum recht hoch. Bei Ladebordwänden, welche beispielsweise gemäß der DE-A 23 13 458 aus in Längsrichtung zusammengesetzten stranggepreßten Aluminiumprofilen bestehen, ist der Materialeinsatz besonders hoch, was bei den gewünschten physikalischen Eigenschaften gar nicht notwendig wäre.

Aus der FR-A 2 575 709 ist ferner eine Ladebordwand gemäß dem Oberbegriff von Anspruch 1 bekannt, welche aus einzelnen in Längsrichtung zusammengesetzten straggepreßten Aluminiumprofilen besteht und die ferner von Versteifungsprofilen unterlegt ist. Diese Versteifungsprofile haben eine U-Form, so daß sie über die gesamte Länge eine gleichbleibende Versteifungseigenschaft aufweisen bzw. zum Anpassen an gewünschte unterschiedliche Gegebenheiten nachbearbeitet werden müssen. Sie können auch keine andere Funktion an der Ladebordwand übernehmen.

Der Erfinder hat sich zum Ziel gesetzt, eine Ladebordwand der o.g. Art zu entwickeln, bei der gewünschte Versteifungsprofile, gleich welcher Art, kostengünstig herzustellen sind, ohne daß ihre physikalischen Eigenschaften darunter leiden. Ferner ist die Aufgabe der Erfindung das Aufzeigen einer Vorrichtung, insbesondere einer Lade- oder Überfahrbordwand, bei welcher derartige Versteifungsprofile verwendet werden.

Zur Lösung dieser Aufgabe wird eine Ladebordwand der o.g. Art vorgeschlagen, bei der das Versteifungsprofil in seinen Konturen und Ausformungen senkrecht zu seiner Ebene straggepreßt und danach die Versteifungsprofile in einer gewünschen Dicke abgeschnitten werden.

Durch dieses Vorgehen ist es auf einfache Art und Weise möglich, von einem Strangpreßprofil, welches kostengünstig herzustellen ist, die entsprechenden Versteifungsprofile abzuschneiden. Auf diese Weise ist eine Minimierung des Abfalles möglich. Beispielsweise können so Roboterarme hergestellt werden, welche durch entsprechende Versteifungsstege genügende mechanische Festigkeiten aufweisen, aber mit wesentlich weniger Materialeinsatz auskommen.

Die Erfindung soll nicht auf ein bestimmtes Versteifungsprofil festgelegt sein, sondern ihr Anwendungsbereich ist so vielfältig, daß eine Umschreibung den Rahmen der vorliegenden Anmeldung sprengen würde.

Sollte ein entsprechendes Versteifungsprofil eine Länge aufweisen müssen, welche das Vielfache eines einzelnen Profils überschreitet, so ist es möglich, die gewünschte Anzahl von Strangpreßprofilen ggfs. in unterschiedlichen Ausführungsformen in ihrer Längsrichtung aneinanderzulegen, miteinander zu verbinden, insbesondere zu verschweißen, und dann erst die Versteifungsprofile in ihrer gewünschten Dicke abzuschneiden. Auf diese Weise können alle möglichen Formen von Versteifungsprofilen hergestellt werden, u. a. könnten sie auch mehrarmig sein.

Als Material für die Versteifungsprofile findet insbesondere strangpreßbares Metall und hier wiederum insbesondere Aluminium Anwendung.

Die Erfindung wird weiterhin anhand einer bevorzugten Vorrichtung erörtert, welche aus einer versteiften Plattform, insbesondere Lade- oder Überfahrbordwand besteht. Hier ist ein entsprechendes Plattformblech von Längsschienen unterlegt, welche aus abgeschnittenen Strangpreßprofilen bestehen. Im Gegensatz zu den herkömmlichen Ladebordwänden findet hier eine ganz erhebliche Materialeinsparung statt, ohne daß die physikalischen Anforderungen an diese Ladebordwand nicht mehr erfüllt werden können. Ferner wird der Abfall wesentlich minimiert.

Bei der bislang bekannten Ladebordwand, welche aus zusammengesetzten Hohlprofilen bestand, mußten entsprechende Anschlußteile für den Hydraulikantrieb zum Anheben und Absenken der Ladebordwand auf diese aufgesetzt werden. Hierbei ist der Kraftansatz relativ ungünstig und beeinflußt die Schweißnähte des Aufsatzes sehr negativ.

Bei der vorliegenden Erfindung einer Ladebordwand mit einzelnen Längsschienen kann der Antrieb zwischen zwei Längsschienen eingreifen und in der Längsschiene etwa senkrecht zur Kraftübertragung ausgeformte Flächen ausgebildet sein. Die Kraft wird dann auf diese Flächen übertragen, so daß eine Beanspruchung von Schweißnähten nicht mehr stattfindet.

Die Verbindung zwischen Plattformblech und Längsschienen kann durch Schweißen, Nieten od. dgl. erfolgen. In einem bevorzugten Ausführungsbeispiel der Erfindung ist daran gedacht, dem Plattformblech Profilstreifen anzuformen, mit denen es in Aufnahmenuten der Längsschienen eingreift.

Beispielsweise können diese Profilstreifen T-förmig ausgebildet sein, wobei dann die Längsschienen entsprechende T-förmige Aufnahmenuten besitzen. Diese Profilstreifen an der Unterseite des Plattformbleches wirken gleichzeitig auch als Querversteifungen.

Im anderen Fall wird es sich als günstig erweisen, an der Unterseite des Plattformbleches noch weitere Querschienen vorzusehen. Diese Querschienen können ebenfalls genauso wie die Längsschienen aus entsprechenden Strangpreßprofilabschnitten bestehen. In Gebrauchslage greifen sie in entsprechende Kammerabschnitte oder Kammern der Längsschienen ein, durchziehen diese und sind ggfs. mit den Längsschienen verbunden.

Bei diesem Ausführungsbeispiel der Erfindung kann es zu einer Materialeinsparung von bis zu 50% kommen.

Ein weiterer Vorteil der Erfindung, insbesondere bezogen auf die Ladebordwand, ist, daß eine derartige Ladebordwand sich falten läßt. Dieser Vorteil tritt insbesondere dort zu Tage, wo die Rückwand eines Trägerfahrzeuges relatiy niedrig ist, so daß die Ladebordwand in abgesenkter Gebrauchslage relativ steil wäre. Dieses Problem wird durch eine faltbare Ladebordwand beseitigt.

Zur Ausbildung dieser Faltbarkeit der Ladebordwand besteht diese aus unterschiedlichen Teilen, welche miteinander gelenkig verbunden sind. In einem einfachen Fall kann es sich um ein Drehgelenk handeln, wobei dann die entsprechenden Längsschienenteile versetzt zueinander angeordnet sind, so daß sie im gefalteten Zustand nebeneinanderliegen.

Damit wird die Dicke des gefalteten Paketes vermindert.

Sollen die einzelnen Teile der Ladebordwand dagegen mit ihrem Plattformteil aufeinandergelegt werden, so dürfte es sich als günstig erweisen, wenn entsprechende Gelenkstreifen vorgesehen sind, welche dieses Aufeinanderlegen gewährleisten. Hier soll jedoch der Erfindung keine Grenze gesetzt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine Unteransicht einer erfindungsgemäßen Ladebordwand;
- Fig. 2: einen Längsschnitt einer teilweise dargestellten Längsschiene;
- Fig. 3: eine Unteransicht eines weiteren Ausführungsbeispiels einer Ladebordwand;
- Fig. 4: eine Draufsicht auf eine Querschiene;
- Fig. 5: einen teilweise dargestellten Längsschnitt durch eine Längschiene mit im Schnitt dargestellter, eingesetzter Querschiene;
- Fig. 6: den Schnitt gemäß Fig. 5 mit einem weiteren Ausführungsbeispiel einer eingesetzten Querschiene;
- Fig. 7: einen teilweise dargestellten Längsschnitt durch ein weiteres Ausführungsbeispiel einer Längsschiene;
- Fig. 8: eine Unteransicht eines weiteren Ausführungsbeispiels einer Ladebordwand unter Verwendung von Längsschienen entsprechend Fig. 7;
- Fig. 9: eine schematische Darstellung einer zusammengelegten Ladebordwand;
- Fig. 10: die Ladebordwand gemäß Fig. 9 in ausgeklappter Gebrauchslage;
- Fig. 11: ein weiteres Ausführungsbeispiel einer zusammenlegbaren Ladebordwand in Anschlußlage an einen Kastenwagen.

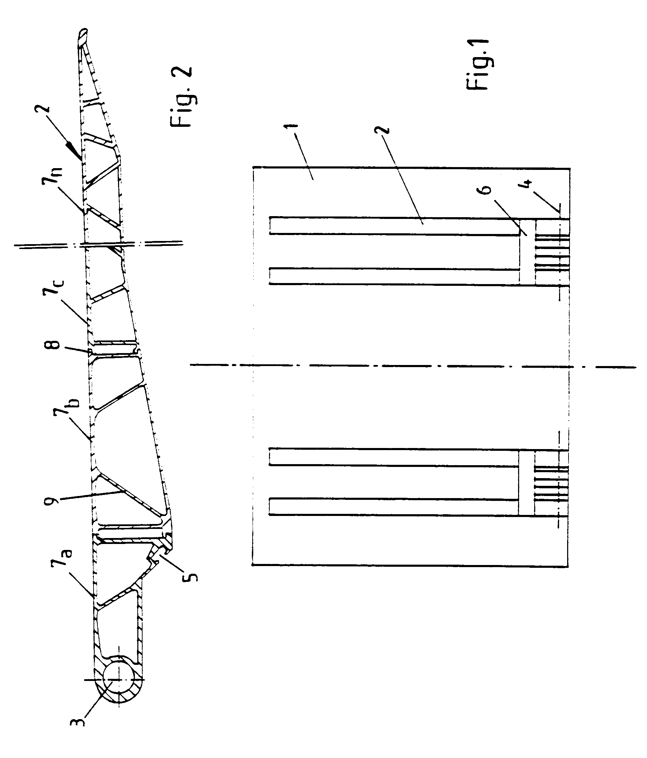

Eine Ladebordwand weist gemäß Figur 1 ein Plattformblech 1 auf, welches im vorliegenden Ausführungsbeispiel von vier Längsschienen 2 unterlegt ist. Zur Herstellung dieser Längsschienen 2 werden erfindungsgemäß erst eine Anzahl von Strangpreßprofilen zu einer Plattform zusammengelegt und zusammengeschweißt und sodann die Längsschienen als Scheiben abgeschnitten. Insbesondere finden Aluminiumstrangpreßprofile Anwendung, wie dies in Figur 2 dargestellt ist.

Einerseits weist jede Längsschiene 2 ein Auge 3 zum gelenkigen Anschluß an ein nicht näher gezeigtes Trägerfahrzeug auf, wobei entsprechende Bolzen bzw. Achsen eine Drehachse 4 bilden, welche in Figur 1 nur strichpunktiert angedeutet ist. Ferner besitzt jede Längsschiene 2 Aufnahmenuten 5 zum Angriff einer ebenfalls nicht näher gezeigten Hebevorrichtung, wobei diese über entsprechende Stützstreifen 6 mit den Längsschienen 2 verbunden ist.

Jede Längsschiene 2 besteht aus unterschiedlichen, miteinander verbundenen Strangpreßprofilen 7a, 7b, 7c und 7n, wobei die Verbindung über entsprechende Nut-Feder-Verbindungen 8 und durch eine Schweißnaht erfolgt.

Das Innere der Strangpreßprofile 7 ist von Versteifungsrippen 9 durchzogen.

Die Verbindung von Längsschienen 2 mit dem Plattformblech 1 kann beispielsweise durch Schweißen geschehen. Für die Wahl des Plattformbleches 1 bietet sich ein entsprechendes Warzenblech an.

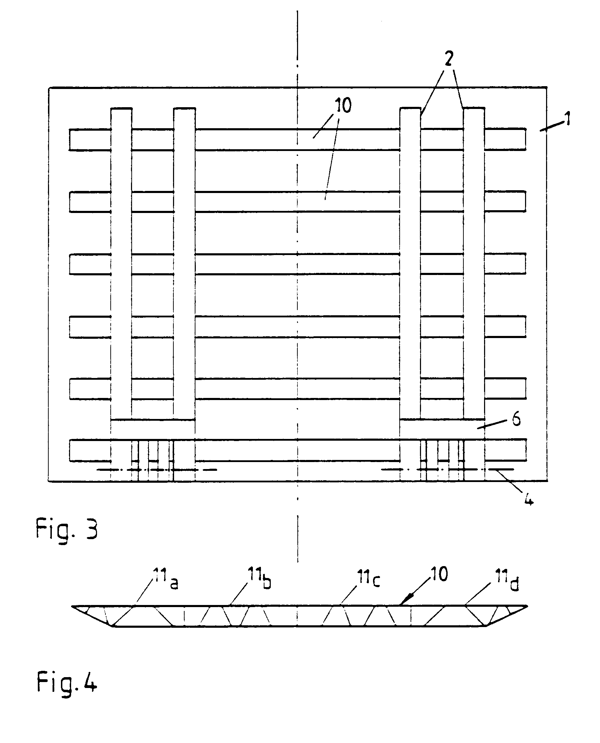

In einem weiteren Ausführungsbeispiel der Erfindung gemäß Figur 3 sind die Längsschienen 2 noch durch zusätzliche Querschienen 10 miteinander verbunden. Hierdurch wird die Steifigkeit der gesamten Ladebordwand wesentlich verbessert.

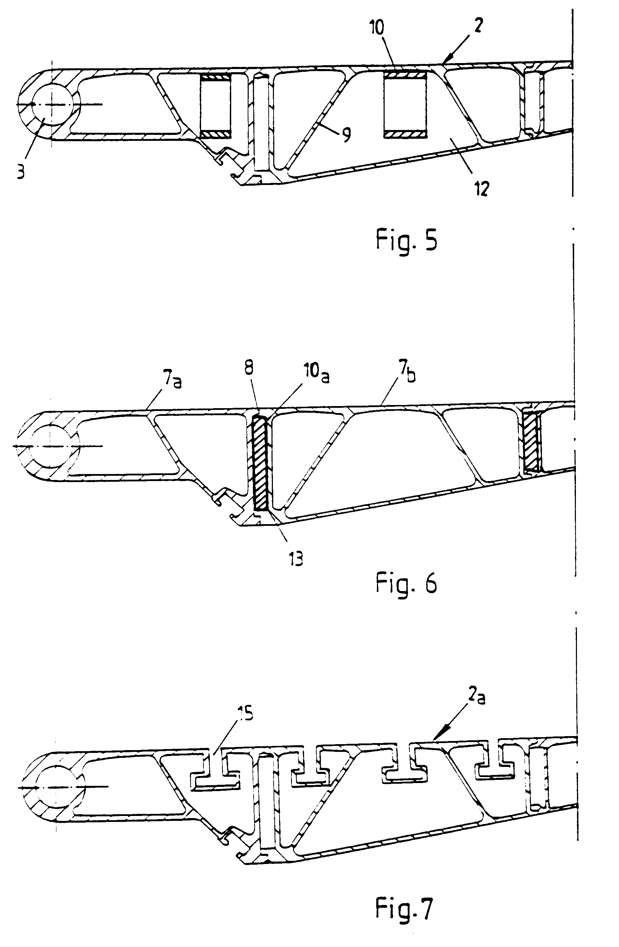

In Figur 4 ist ein Beispiel einer solchen Querschiene 10 gezeigt, welche ähnlich den Längsschienen 2 aus zusammengesetzten Strangpreßprofilabschnitten 11a, 11b, 11c und 11d bestehen. Diese Strangpreßprofilabschnitte 11 können dann in von den Versteifungsrippen 9 gebildete Kammerabschnitte 12 der Längsschienen 2 eingesetzt werden, wie dies in Figur 5 dargestellt ist. Die Verbindung zwischen Querschiene 10 und Längsschiene 2 geschieht bevorzugt ebenfalls durch Schweißen.

Ein anderes Ausführungsbeispiel einer Querschiene 10a wird in Figur 6 gezeigt. Hier besteht diese Querschiene 10a aus einem Vollprofilstreifen, welcher in eine Kammer 13 der Längsschiene 2 eingesetzt ist. Diese Kammer 13 wird im Bereich der Nut-Feder-Verbindung 8 zwischen zwei entsprechenden Strangpreßprofilen 7 ausgebildet.

Der Vorteil dieses Einsatzes ist, daß die Kammer 13 relativ eng ausgestaltet ist, so daß der entsprechende Vollprofilstreifen auch seitlichen Kontakt hat.

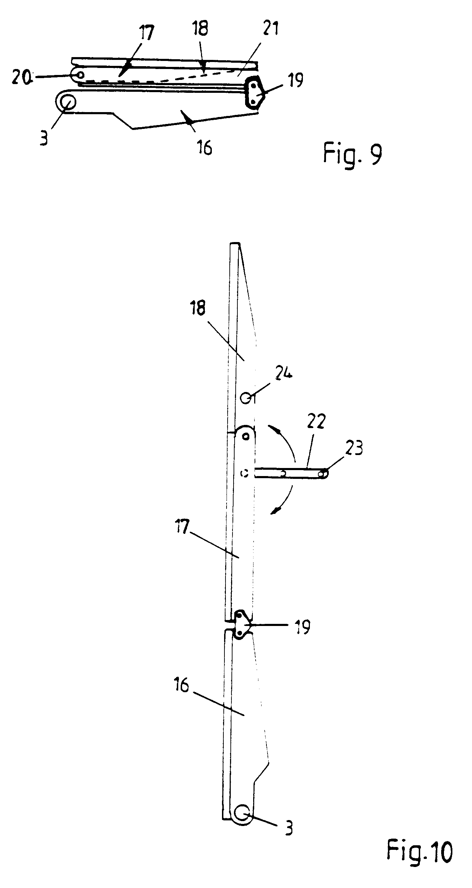

Auch für die Verbindung zwischen Längsschienen 2a und Plattformblech 1a gemäß den Figuren 7 und 8 ist eine Neuerung vorgesehen. Hier besteht das Plattformblech 1a aus ebenfalls stranggepreßten Bodenplankenprofilen, denen an der Unterseite T-förmige Profilstreifen 14 angeformt sind. In Gebrauchslage greifen diese T-förmigen Profilstreifen 14 in entsprechende Aufnahmenuten 15 der Längsschienen 2a ein. Gesonderte Querschienen erübrigen sich bei diesem Ausführungsbeispiel.

Durch die erfindungsgemäße Ausbildung der Ladebordwand aus Plattformblech 1 und Längsschienen 2 bzw. getrennt angeordneten Querschienen 10 ergibt sich die Möglichkeit der Faltbarkeit der Ladebordwand. Gemäß den Figuren 9 und 10 besteht eine derartige Ladebordwand aus drei Teilen 16, 17 und 18. Das Teil 16 ist als Anschlußteil mit dem Auge 3 zum Anschluß an ein entsprechendes Trägerfahrzeug ausgebildet. Ferner besitzt es einen Gelenkstreifen 19, mit dem es gelenkig mit dem Mittelteil 17 verbunden ist. Dabei ist der Gelenkstreifen 19 so ausgestaltet, daß beim Zusammenlegen der Ladebordwand der Mittelteil 17 mit einem genügenden Abstand das Anschlußteil 16 übergreifen kann.

Für die Verbindung von Mittelteil 17 zu Schlußteil 18 genügt dann ein einfaches Drehgelenk 20. Gestrichelt ist hier angedeutet, wie sich der Längsschienenteil des Schlußteils 18 neben den Längsschienenteil 21 des Mittelteils 17 legt.

Während im auseinandergefalteten Zustand gemäß Figur 10 der Gelenkstreifen 19 so ausgebildet ist, daß der Mittelteil 17 gegenüber dem Anschlußteil 16 abgestützt wird, soll der Mittelteil 17 mit dem Schlußteil 18 über eine entsprechende Verriegelungslasche 22 verbunden werden. In Gebrauchslage wird hier ein entsprechender Bolzen 23 in eine Öffnung 24 eingesetzt.

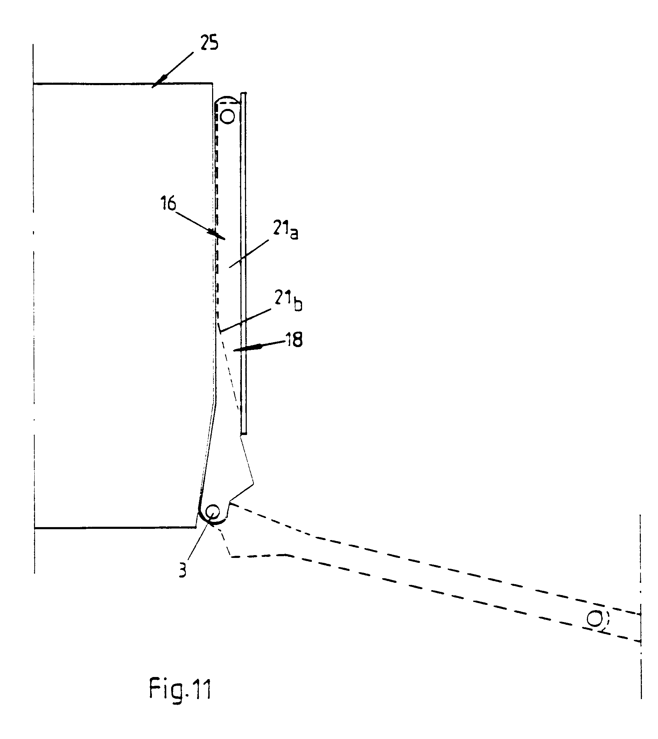

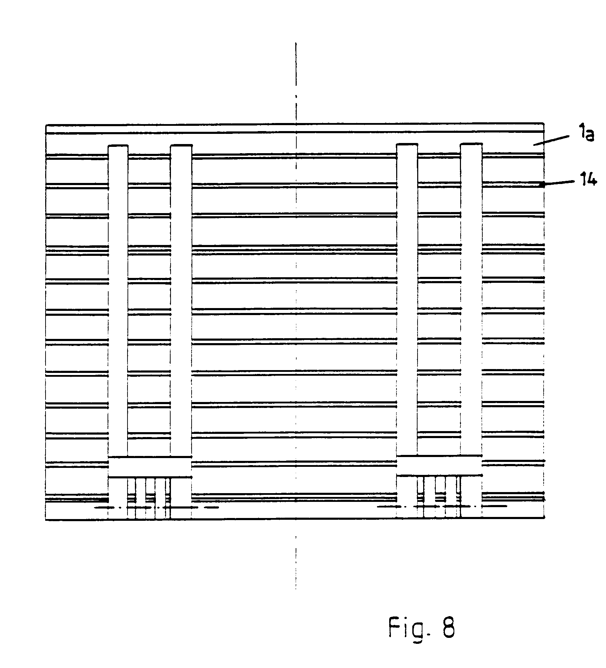

Ein weiteres Ausführungsbeispiel einer faltbaren Ladebordwand ist in Figur 11 gezeigt. Diese ist wiederum über das entsprechende Auge 3 mit der Rückseite eines Kastenwagens 25 verbunden. Der Anschlußteil 16 überdeckt die gesamte Rückseite des Kastenwagens 25, während das Schlußteil 18 eingeklappt ist. Auch hier ist deutlich erkennbar, daß die entsprechenden Längsschienenteile 21a und - gestrichelt angedeutet - 21b versetzt zueinander angeordnet sind.

## Patentansprüche

1. Lade- oder Überfahrbordwand aus einer Plattform (1) und zumindest einer darunter angeordneten Längsschiene (2), dadurch gekennzeichnet, daß die Längsschiene (2) aus zumindest einem quer zu seiner Längsrichtung hergestellten und abgeschnittenen Strangpreßprofil (7) besteht.

2. Lade- oder Überfahrbordwand nach Anspruch 1, dadurch gekennzeichnet, daß die Längsschienen (2a) Aufnahmenuten (15) aufweisen und das Plattformblech (1a) entsprechend angeformte Profilstreifen (14) besitzt, mit denen es mit den Längsschienen verbunden ist.

3. Lade- oder Überfahrbordwand nach Anspruch 1 oder 2, dadurch gekennzeichnet, daß an der Unterseite des Plattformbleches (1) Querschienen (10) vorgesehen sind.

4. Lade- oder Überfahrbordwand nach Anspruch 3, dadurch gekennzeichnet, daß die Querschienen (10) ebenfalls wie die Längsschienen (2) aus Strangpreßprofilabschnitten (11) bestehen.

5. Lade- oder Überfahrbordwand nach Anspruch 4, dadurch gekennzeichnet, daß die Querschienen (10) entsprechende Kammerabschnitte (12) oder Kammern (13) in den Längsschienen (2) durchziehen und mit den Längsschienen (2) verbunden sind.

6. Lade- oder Überfahrbordwand nach wenigstens einem der Ansprüche 1 bis 5, dadurch gekennzeichnet, daß die Plattform aus Teilen (16,17,18) besteht, welche untereinander gelenkig verbunden sind, wobei jedes Teil (16-18) auch einen Längsschienenteil (21) besitzt.

7. Lade- oder Überfahrbordwand nach Anspruch 6, dadurch gekennzeichnet, daß die Längsschienenteile (21) teilweise zueinander in ihrer Längsrichtung versetzt angeordnet sind.

## Claims

1. Loading or run-on dropside comprising a platform (1) and at least one longitudinal rail (2) arranged therebelow, characterised in that the longitudinal rail (2) consists of at least one extruded profile (7) which is produced and cut off transversely to its longitudinal direction.

2. Loading or run-on dropside according to claim 1, characterised in that the longitudinal rails (2a) have receiving grooves (15) and the platform plate (1a) possesses appropriately moulded profile strips (14) by which it is connected to the longitudinal rails.

3. Loading or run-on dropside according to claim 1 or 2, characterised in that transverse rails (10) are provided on the underside of the platform plate (1).

4. Loading or run-on dropside according to claim 3, characterised in that the transverse rails (10) as well as the longitudinal rails (2) consist of extruded profile portions (11).

5. Loading or run-on dropside according to claim 4, characterised in that the transverse rails (10) pass through corresponding chamber portions (12) or chambers (13) in the longitudinal rails (2) and are connected to the longitudinal rails (2).

6. Loading or run-on dropside according to at least one of claims 1 to 5, characterised in that the platform consists of parts (16, 17, 18) which are articulated to one another, each part (16-18) also possessing a longitudinal rail part (21).

7. Loading or run-on dropside according to claim 6, characterised in that the longitudinal rail parts (21) are partially offset from one another in their longitudinal direction.

## Revendications

1. Hayon de chargement ou de relevage à partir d'une plate-forme (1) et d'au moins un rail longitudinal (2) placé en-dessous, caractérisé en ce que le rail longitudinal (2) consiste au moins en un profilé extrudé (7) fabriqué et découpé perpendiculairement à son sens longitudinal.

2. Hayon de chargement ou de relevage selon la revendication 1, caractérisé en ce que les rails longitudinaux (2a) présentent des rainures réceptrices (15) et la tôle de la plate-forme (1a) possède une bande profilée (14) formée en conséquence, par lesquelles elle est reliée aux rails longitudinaux.

3. Hayon de chargement ou de relevage selon la revendication 1 ou 2, caractérisé en ce que sur la face inférieure de la tôle de la plate-forme (1) sont prévus des rails transversaux (10).

4. Hayon de chargement ou de relevage selon la revendication 3, caractérisé en ce que les rails transversaux (10) consistent également comme les rails longitudinaux (2) en sections (11) de profilés extrudés.

5. Hayon de chargement ou de relevage selon la revendication 4, caractérisé en ce que les rails transversaux (10) passent à travers des sections de chambres correspondantes (12) ou des chambres correspondantes (13) dans les rails longitudinaux (2) et sont reliés aux rails longitudinaux (2).

6. Hayon de chargement ou de relevage selon au moins l'une des revendications 1 a 5, caractérisé en ce que la plate-forme est composé de parties (16, 17, 18), qui sont reliées de façon articulée entre elles, chaque partie (16-18) possédant aussi une partie de rail longitudinal (21).

7. Hayon de chargement ou de relevage selon la revendication 6, caractérisé en ce que les parties de rail longitudinal (21) sont disposées de façon partiellement décalée les unes par rapport aux autres dans leur sens longitudinal.
